# EUROPÄISCHE PATENTSCHRIFT

(11) **EP 4 084 143 B1**
(45) Veröffentlichungstag und Bekanntmachung des Hinweises auf die Patenterteilung: **11.11.2026**
(21) Anmeldenummer: 22167988.9
(22) Anmeldetag: 12.04.2022
(51) Int. Cl.: H01M 4/505, H01M 4/525, H01M 10/0525, H01M 10/42

(54) **VERFAHREN ZUR REGENERATION EINES FERTIGGESTELLTEN LITHIUM-IONEN-AKKUMULATORS UND LITHIUM-IONEN-AKKUMULATOR**
METHOD FOR THE REGENERATION OF A COMPLETED LITHIUM-ION BATTERY AND LITHIUM-ION BATTERY
PROCÉDÉ DE RÉGÉNÉRATION D'UN ACCUMULATEUR LITHIUM-ION TERMINÉ ET ACCUMULATEUR LITHIUM-ION

(30) Priorität: 30.04.2021 DE 102021204344
(43) Veröffentlichungstag der Anmeldung: 02.11.2022
(73) Patentinhaber: VOLKSWAGEN AG, 38440 Wolfsburg (DE)
(72) Erfinder: KOCH, Stephan Leonhard, 38154 Königslutter (DE); KUNZE, Miriam, 30926 Seelze (DE); LANG, Michael, 31135 Hildesheim (DE)
(74) Vertreter: FDST Patentanwälte

(56) Entgegenhaltungen:
- CN-A- 111 354 980
- US-A1- 2017 040 589

## Beschreibung

Die Erfindung betrifft ein Verfahren zur Regeneration eines fertiggestellten Lithium-Ionen-Akkumulators. Außerdem betrifft die Erfindung einen Lithium-Ionen-Akkumulator.

Lithium-Ionen-Akkumulatoren sind als Speicher für elektrische Energie weit verbreitet. Sie werden unter anderem auch im Kraftfahrzeugbereich eingesetzt und dienen hier insbesondere als sogenannte Antriebs- oder Traktionsbatterien zum Antrieb von Hybrid- oder Elektrofahrzeugen.

Ein Lithium-Ionen-Akkumulator weist als wesentliche Komponenten eine positive Elektrode, eine negative Elektrode, einen Separator und ein Elektrolyt auf. Hinsichtlich des genauen Aufbaus sind dabei eine Vielzahl von Ausführungen bekannt.

Die Herstellung ist zum Beispiel in "Heimes, Heiner Hans; Kampker, Achim; Lienemann, Christoph; Locke, Marc; Offermanns, Christian; Michaelis, Sarah; Rahimzei, Ehsan (2018): Produktionsprozess einer Lithium-Ionen-Batteriezelle, Frankfurt am Main, PEM der RWTH Aachen und VDMA Eigendruck" skizziert.

Ein weiteres Verfahren zur Herstellung eines Lithium-Ionen-Akkumulator ist in der CN 111 354 980 A beschrieben.

Allen Ausführungen gemein ist, dass im Lithium-Ionen-Akkumulator freie und somit mobile Lithium-Ionen vorliegen, also Lithium-Ionen, die frei durch den Elektrolyten zwischen der negativen Elektrode und der positiven Elektrode hin- und herwandern können.

Aufgrund von unerwünschten Nebenreaktionen im Lithium-Ionen-Akkumulator nimmt die Anzahl freier Lithium-Ionen typischerweise mit der Zeit ab und somit auch die Anzahl Lithium-Ionen, die zu einem Ladungstransport beitragen können. Hierdurch wird die Leistungsfähigkeit des Lithium-lonen-Akkumulators reduziert. Dieser Vorgang wird häufig als Teil eines Alterungsprozesses betrachtet.

In der US 2017/040589 A1 ist ein Verfahren zur Regeneration eines gebrauchten Lithium-Ionen-Akkumulators beschrieben. Dabei ist es vorgesehen, eine im Lithium-Ionen-Akkumulator vorhandenen Elektrolyt-Lösung zu regenerieren, indem in diese eine weitere Lösung eingemischt wird.

Der Erfindung liegt die Aufgabe zugrunde, ein Verfahren zur Regeneration eines fertiggestellten Lithium-Ionen-Akkumulators anzugeben sowie einen vorteilhaft ausgestalteten Lithium-Ionen-Akkumulator.

Diese Aufgabe wird durch ein Verfahren mit den Merkmalen des Patentanspruchs 1 und durch einen Lithium-Ionen-Akkumulator mit den Merkmalen des Patentanspruchs 10 gelöst. Die im Hinblick auf das Verfahren angeführten Vorteile und bevorzugten Ausgestaltungen sind sinngemäß auch auf den Lithium-Ionen-Akkumulator übertragbar und umgekehrt. Vorteilhafte Ausgestaltungen mit zweckmäßigen Weiterbildungen der Erfindung sind in den abhängigen Patentansprüchen angegeben.

Das erfindungsgemäße Verfahren dient dabei der Regeneration eines fertiggestellten Lithium-Ionen-Akkumulators, welcher nach seiner Fertigstellung bereits über einen Nutzungs-Zeitraum hinweg in einem Arbeitsmodus betrieben wurde. D. h., dass der Lithium-Ionen-Akkumulator, oder kurz der Akkumulator, nach seiner Fertigstellung eine Zeit lang in Gebrauch gewesen ist und währenddessen einem eingangs beschriebenen Alterungsprozess unterlegen war. Somit dient das erfindungsgemäße Verfahren der Regeneration eines bereits gealterten Akkumulators, insbesondere eines bereits im Alltagsbetrieb gealterten Akkumulators.

Der Nutzungs-Zeitraum ist dabei typischerweise größer gleich 2 Jahre und insbesondere größer gleich 4 Jahre. Das Verfahren wird jedoch üblicherweise nicht nach einem fest vorgegebenen Zeitintervall durchgeführt. Stattdessen erfolgt die Ausführung bevorzugt nach einer vorgegebenen Anzahl Lade-Entlade-Zyklen von wenigstens 200 und insbesondere von wenigstens 400 bzw. nach einem definierten Ladungsdurchsatz, der sich typischerweise nach der Kapazität der Akkumulator-Zellen richtet und dessen Wert insbesondere in einem Bereich liegt, der für die zuvor genannte Anzahl Lade-Entlade-Zyklen repräsentativ ist. Alternativ erfolgt die Ausführung nach Erreichen eines vorgegebenen Abnutzungszustandes, also zum Beispiel, wenn die Restkapazität kleiner gleich 95 % und insbesondere kleiner gleich 90 % der Kapazität bei Fertigstellung des Akkumulators ist, oder, wenn der sogenannte SoH (SoH: State-of-Health) kleiner gleich 95 % und insbesondere kleiner gleich 90 % ist. Entsprechende Abnutzungszustände werden in der Regel nach einem Nutzungs-Zeitraum größer gleich 2 Jahre und insbesondere größer gleich 4 Jahre erreicht.

Hierbei sei nochmals klargestellt, dass sich der Nutzungs-Zeitraum und die Alterung auf einen Zeitraum nach der Fertigstellung des Akkumulators beziehen. Dabei umfasst die Fertigung oder Herstellung des Akkumulators typischerweise mehrere Fertigungsschritte und insbesondere zwei Fertigungsschritte, die üblicherweise als "Formation" und "Aging" bezeichnet werden. Hierzu sei beispielhaft auf "Heimes, Heiner Hans; Kampker, Achim; Lienemann, Christoph; Locke, Marc; Offermanns, Christian; Michaelis, Sarah; Rahimzei, Ehsan (2018): Produktionsprozess einer Lithium-lonen-Batteriezelle, Frankfurt am Main, PEM der RWTH Aachen und VDMA Eigendruck" verwiesen.

Weiter ist das erfindungsgemäße Verfahren insbesondere ausgebildet für einen erfindungsgemäßen Lithium-Ionen-Akkumulator. Es wird also typischerweise auf einen erfindungsgemäßen Lithium-Ionen-Akkumulator angewendet. Ein erfindungsgemäßer Lithium-Ionen-Akkumulator, nachfolgend auch kurz Akkumulator genannt, ist wiederum bevorzugt ausgestaltet und eingerichtet für das erfindungsgemäße Verfahren, also derart, dass das erfindungsgemäße Verfahren auf den Akkumulator anwendbar ist und mit dem erfindungsgemäßen Akkumulator ausführbar ist.

Der Akkumulator weist dabei zumindest eine Akkumulator-Zelle auf. Hierbei bildet die Akkumulator-Zelle im einfachsten Fall den Akkumulator aus. Bevorzugt weist der Akkumulator jedoch mehrere Akkumulator-Zellen auf, wobei die Akkumulator-Zellen weiter bevorzugt gleichartig ausgestaltet und typischerweise miteinander verschaltet sind. Zudem ist der Akkumulator bevorzugt für den Einsatz im Kraftfahrzeugbereich ausgebildet und insbesondere ausgestaltet als sogenannte Antriebs- oder Traktionsbatterie zum Antrieb eines Hybrid- oder Elektrofahrzeugs.

In jedem Fall aber weist die Akkumulator-Zelle, nachfolgend auch kurz Zelle genannt, als wesentliche Komponenten eine positive Elektrode (diese ist beim Entladen der Zelle die Kathode und beim Aufladen die Anode), eine negative Elektrode (diese ist beim Entladen der Zelle die Anode und beim Aufladen die Kathode), einen Separator sowie ein Elektrolyt auf. Hierbei ist das Elektrodenmaterial der negativen Elektrode beispielsweise Graphit oder Silicium. Das Elektrodenmaterial der positiven Elektrode ist zum Beispiel ein NMC (Lithium-Nickel-Mangan-Cobalt-Oxid), LFP (Lithiumeisenphosphat) oder ein NCA (Lithium-Nickel-Cobalt-Aluminium-Oxid). Alternativ kommen sogenannte Next-Generation Elektrodenmaterialien, insbesondere Next-Generation Kathodenmaterialien, zum Einsatz oder Hochvolt-Spinelle, wie LNMO (Lithiumnickelmanganoxid). Zudem weist die Akkumulator-Zelle üblicherweise ein Zellgehäuse auf, in dem die zuvor genannten wesentlichen Komponenten angeordnet sind, sowie zwei Stromableiter, auch Stromabnehmer, Anschlussfähnchen oder Ableiterfähnchen genannt, auf.

Darüber hinaus weist der Akkumulator vorzugsweise eine Schutzschaltung auf, welche zum Beispiel durch eine Steuereinrichtung oder ein Steuergerät des Akkumulators realisiert ist. Eine entsprechende Schutzschaltung dient dabei der Regelung oder Steuerung des Flusses an elektrischer Energie in und aus dem Akkumulator und verhindert typischerweise eine sogenannte Tiefenentladung und/oder eine Überladung des Akkumulators.

Um nun einen zuvor beschriebenen Akkumulator, der nach Fertigstellung über den zuvor genannten Nutzungs-Zeitraum hinweg betrieben wurde, zu regenerieren, wird im Zuge des Verfahrens die Zelle, also die Akkumulator-Zelle, über einen Regenerations-Zeitraum hinweg in einem Regenerationsmodus betrieben, also einem Betriebsmodus, der sich vom Arbeitsmodus unterscheidet. Dabei wird im Regenerationsmodus innerhalb der Zelle eine chemische Reaktion hervorgerufen, an der ein in der Zelle vorliegendes Additiv beteiligt ist. Die chemische Reaktion, bei der sich typischerweise um eine sogenannte Reduktions-Oxidations-Reaktion oder kurz Redoxreaktion handelt, wird hierbei hervorgerufen, indem die Zellspannung der Zelle aus einem Arbeitsfenster des Arbeitsmodus herausgeführt wird oder indem zumindest das Potential der negativen Elektrode aus einem Potentialfenster des Arbeitsmodus herausgeführt wird. Infolge der chemischen Reaktion wird dann die Anzahl freier und somit mobiler Lithium-Ionen in der Zelle erhöht, wodurch die Akkumulator-Zelle regeneriert wird.

Als freie und somit mobile Lithium-Ionen werden hierbei Lithium-Ionen bezeichnet, die frei durch den Elektrolyten zwischen der negativen Elektrode und der positiven Elektrode hin- und herwandern können und die somit zu einem Ladungstransport beitragen können. Die Anzahl freier und somit mobiler Lithium-Ionen ist dabei mitbestimmend für die Leistungsfähigkeit des Lithium-Ionen-Akkumulators. Sie reduziert sich durch den eingangs genannten Alterungsprozess und wird durch das Verfahren wieder erhöht. Daher kann von einer Regeneration des Akkumulators durch das erfindungsgemäße Verfahren gesprochen werden.

Das zuvor genannte Arbeitsfenster des Arbeitsmodus wird üblicherweise vom Hersteller des Akkumulators vorgegeben. Es entspricht einem Spannungsbereich oder Spannungsintervall, welcher bzw. welches beispielsweise durch die zuvor genannte Schutzschaltung vorgegeben und/oder festgelegt ist. Beim Laden und Entladen des Akkumulators bewegt sich die Zellspannung daher ausschließlich innerhalb des Arbeitsfensters, zumindest solange der Akkumulator im Arbeitsmodus betrieben wird. Begrenzt ist das Arbeitsfenster zweckdienlicherweise durch einen unteren Arbeits-Spannungs-Grenzwert, der auch als Entladeschlussspannung bezeichnet wird, und einen oberen Arbeits-Spannungs-Grenzwert, welcher auch als Ladeschlussspannung bezeichnet wird. Dabei gilt dann die Zelle im Arbeitsmodus als vollständig aufgeladen, wenn der vorgegebene obere Arbeits-Spannungs-Grenzwert erreicht ist, und als vollständig entladen, wenn der vorgegebene untere Arbeits-Spannungs-Grenzwert erreicht ist. Ein typischer Wert für den unteren Arbeits-Spannungs-Grenzwert ist zum Beispiel 2,5 V und typischer Wert für den oberen Arbeits-Spannungs-Grenzwert ist beispielsweise 4,3 V.

Der zuvor genannte Regenerationsmodus, bei dem die Zellspannung aus diesem Arbeitsfenster herausgeführt wird, ist daher ein spezieller Betriebsmodus, der bevorzugt ausschließlich für die Regeneration des Akkumulator genutzt wird und dementsprechend für den normalen, standardmäßigen Betrieb des Akkumulators nicht zur Verfügung steht. Je nach Anwendungsfall ist für den Regenerationsmodus oder zur Umsetzung des Regenerationsmodus spezielles Equipment, also zum Beispiel eine Wartungsvorrichtung, erforderlich, welches beispielsweise von einem Servicetechniker eingesetzt wird. Alternativ ist das zuvor genannte Steuergerät des Akkumulators eingerichtet, automatisch zwischen dem Arbeitsmodus und dem Regenerationsmodus zu wechseln.

Weiter wird zur Regeneration als Additiv bevorzugt eine Substanz genutzt, welche Lithium aufweist. In diesem Fall dient dann das Additiv im Regenerationsmodus zweckdienlicherweise als Spender für freie und somit mobile Lithium-Ionen. Im Regenerationsmodus findet dann quasi ein Postlithiierungsprozess statt. In einigen Fällen weist das Additiv hierbei zwei Komponenten A und B auf. Dabei ist B zum Beispiel ein Lithium-Salz mit einem Kation Li⁺ und mit einem Anion B⁻ des Salzes. B gibt hierbei im Regenerationsmodus ein Lithium-Ion frei:

B → B⁻ + Li⁺

A ist dann üblicherweise eine Komponente, die als Elektronenlieferant dient:

A → A⁺ + e⁻

In der Folge wird dann eine der Elektroden mit freien Lithium-Ionen angereichert:

NE_{Lithiumarm} + Li⁺ + e⁻ → NE_{Lithiumreich}

Hierbei steht NE für die negative Elektrode, wobei das Elektrodenmaterial beispielsweise Graphit ist. Alternativ wird die positive Elektrode PE angereichert, wobei das Elektrodenmaterial zum Beispiel ein NCM (Lithium-Nickel-Mangan-Cobalt-Oxid) ist:

PE_{Lithiumarm} + Li⁺ + e⁻ → PE_{Lithiumreich}

B⁻ lagert sich in manchen Fällen in der Folge, also beispielsweise nach entsprechender Diffusion, an A⁺ an und/oder bildet mit A⁺ einen Komplex.

Alternativ oder zusätzlich wird als Additiv eine Substanz verwendet, mit deren Hilfe sich Lithium-Ionen, die aufgrund eines eingangs beschriebenen Alterungsprozesses nicht mehr als freie und somit mobile Lithium-Ionen vorliegen sondern stattdessen gebunden sind, beispielsweise in der sogenannten SEI (solid electrolyte interphase), wieder aus der Bindung lösen lassen, so dass diese nachfolgend wieder als freie und somit mobile Lithium-Ionen in der Zelle vorliegen.

Je nach Anwendungsfall wird dabei zur Regeneration als Additiv zumindest eine der folgenden Substanzen genutzt: ein Lithium-Salz, eine Organometall-Verbindung, wie z.B. Lithium-Kronenether, eine organische Säure oder deren Salz, wie z.B. Lithiumsalz der Fumarsäure, der Buttersäure oder einer anderen Fettsäure, ein Alkoholat, wie z.B. Lithium-Ethanolat, Lithium-Propanolat oder Lithium-Phenolat, oder ein Polyelektrolyt, wie z.B. ein Lithium-Polystyrolsulfonat oder eine Lithium-Polyacrylsäure.

Weist das Additiv, so wie zuvor ausgeführt, Lithium auf, so liegt die Menge an Lithium im Additiv zu Beginn der Regeneration vorzugsweise im Bereich von 0,1 mol bis 1,2 mol, weiter bevorzugt im Bereich von 0,2 mol bis 0,8 mol und insbesondere im Bereich von 0,25 mol bis 0,5 mol. Die Menge wird hierbei zweckdienlicherweise abhängig von der Größe der Akkumulator-Zelle und insbesondere von der Kapazität der Akkumulator-Zelle zum Zeitpunkt der Fertigstellung des Akkumulators vorgegeben. Die oben genannten Werte gelten daher zum Beispiel pro 100 Ah Kapazität der Akkumulator-Zelle. Zweckdienlicherweise richtet sich die Menge außerdem nach dem zuvor beschriebenen Abnutzungszustand, bei dem das Verfahren ausgeführt wird. Die oben genannten Werte gelten daher beispielsweise alternativ oder zusätzlich pro 10 % Kapazitätsverlust ausgehend von der Kapazität zum Zeitpunkt der Fertigstellung des Akkumulators.

Zweckdienlich ist es weiter, wenn das zuvor beschriebene Additiv bereits während dem Betrieb des fertiggestellten Lithium-Ionen-Akkumulators im Arbeitsmodus über den Nutzungs-Zeitraum hinweg in der Akkumulator-Zelle enthalten ist. In einigen Fällen wird das Additiv dabei nach Abschluss einer zuvor genannten "Formation" in die Akkumulator-Zelle eingebracht. D. h., dass in diesem Fall im Zuge der Fertigung oder Herstellung des Akkumulators eine "Formation" vorgenommen wird und dass die Einbringung des Additivs nach dieser "Formation" in einem nachfolgenden Fertigungsschritt vorgenommen wird oder erfolgt.

Alternativ wird das Additiv bereits vor einer solchen "Formation" eingebracht und insbesondere in diesem Fall wird das Additiv vorzugsweise aus einer Verkapselung heraus freigesetzt, so dass dieses nachfolgend für die Regeneration zur Verfügung steht. Eine solche Freisetzung erfolgt dabei bevorzugt nach der "Formation" und insbesondere nach der Fertigstellung des Akkumulators, also zum Beispiel auch erst nach einem Betrieb des fertiggestellten Akkumulator im Arbeitsmodus über einen gewissen Zeitraum hinweg. Zudem erfolgt die Freisetzung aus der Verkapselung heraus vorzugsweise zeitverzögert.

Eine entsprechende Verkapselung wird vorteilhafterweise mit Hilfe von Hohlkörpern realisiert. D. h., dass entsprechende Hohlkörper in ein Zellgehäuse der Akkumulator-Zelle eingebracht werden und dass diese Hohlkörper mit dem Additiv befüllt sind.

Bei den Hohlkörpern handelt es sich je nach Ausführungsvariante zum Beispiel um Hohlkörper aus Glas. In einer zweckmäßigen Ausführung handelt es sich bei diesem Glas bspw. um ein Silikatglas, ein Alumosilikatglas, ein Phosphorsilikatglas, ein Phosphatglas, ein Boratglas und/oder um ein Borosilikatglas. Alternative Materialien für entsprechende Hohlkörper sind aus der DE 101 51 830 A1 zu entnehmen, auf die an dieser Stelle ausdrücklich Bezug genommen wird.

Die Freisetzung aus der Verkapselung heraus erfolgt dann in einigen Fällen dadurch, dass die Hohlkörper, also insbesondere die Glashohlkörper, zerstört werden, beispielweise indem das Material der Hohlkörper, also insbesondere das Glas, sich mit der Zeit im Elektrolyt auflöst oder vom Elektrolyten zersetzt wird. Alternativ erfolgt die Freisetzung durch Diffusion. D.h., dass das Additiv oder zumindest Bestandteile des Additivs durch das Material der Hohlkörper hindurch diffundiert und auf diese Weise aus der Verkapselung heraus freigesetzt wird. Ausführungsbeispiele hierfür sind aus der DE 10 2013 219 865 A1 zu entnehmen, auf die an dieser Stelle ausdrücklich Bezug genommen wird.

Die Hohlkörper sind weiterhin im einfachsten Fall als Hohlkugeln ausgebildet. Bestehen die Hohlkörper dann zudem aus Glas, so sind die Hohlkörper als Glashohlkugeln ausgestaltet.

Gemäß einer bevorzugten Ausführung erfolgt die Freisetzung aus der Verkapselung heraus, indem das Material der Hohlkörper sich mit der Zeit im Elektrolyt auflöst oder vom Elektrolyten zersetzt wird. Dabei ist dann weiter bevorzugt das Material der Hohlkörper derart gewählt, dass dieses durch eine chemische Reaktion mit dem Elektrolyten, optional vollständig, gelöst wird. Dies hat den Vorteil, dass eine solche chemische Reaktion grundsätzlich unabhängig vom Betriebszustand der Zelle und/oder deren Auslastung ablaufen kann und somit der Zeitpunkt der Freisetzung des Inhalts, also des Additivs, vergleichsweise einfach vorauszubestimmen ist. Außerdem wird die Auflösung des Materials der Hohlkörper häufig durch Nebenprodukte, die im Betrieb der Zelle gebildet werden und (insbesondere neben dem Verbrauch von Li-Ionen) ebenfalls zur Zellalterung, zumindest zur Reduktion deren Leistungsfähigkeit, führen, getriggert. Durch deren chemische Reaktion mit dem Material der Hohlkörper, also zum Beispiel mit dem Glas, können diese Nebenprodukte vorteilhafterweise "aufgefangen" (bspw. gebunden oder umgewandelt) und somit die Zellalterung verlangsamt und/oder verzögert werden.

Nebenprodukte, die im Betrieb der Zelle häufig auftreten, sind beispielsweise Wasser und Flußsäure (HF), die insbesondere aus einem Lithium-Salz (oder gegebenenfalls auch mehreren verschiedenen Lithium-Salzen, falls vorhanden) des Elektrolyten gebildet werden. Letzteres ist insbesondere dann der Fall, wenn Spuren von Wasser im Elektrolyten vorhanden sind. Alternativ oder auch zusätzlich können Abbauprodukte des Elektrolyten auch mit einem Hexafluorophosphat (HF₆) reagieren und dabei Flußsäure freisetzen. Flußsäure kann dabei bekanntermaßen Glas angreifen und lösen, was ja ein mögliches Material für die Hohlkörper ist.

Der Elektrolyt weist bevorzugt zumindest ein Lösemittel, insbesondere ein organisches Lösemittel, auf sowie wenigstens ein Lithium-Salz (auch: "Lithium-Leitsalz"). Als ein solchen Lithium-Salz kommt beispielswiese wenigstens LiAsF6, LiCLO4, LiSbF6, LiPtCl6, Li(CF3)SO3 (LiTf), LiC (SO2CF3)3, ein phosphatbasiertes Lithium-Salz - z. B. LiPF6, LiPF3(CF3)3 (LiFAP) und LiPF4(C2O4) (LiTFOB) - ein boratbasiertes Lithium-Salz - bspw. LiBF4, LiB(C2O4)2 (LiBOB), LiBF2(C2O4) (LiDFOB), LiB(C2O4)(C3O4) (LiMOB), Li(C2F5BF3) (LiFAB) und Li2B12Fi2 (LiDFB),L - und/oder ein Lithium-Salz von Sulfonylimiden - z. B. LiN(SO2CF3)2 (LiTFSI) und LiN (SO2C2F5)2 (LiBETI) - zum Einsatz. Ein besonders bevorzugtes Lithium-Leitsalz ist LiPF6 (Lithiumhexafluorphosphat) oder Mischungen von diesem. Als Lösungsmittel kommt bspw. ein Ethylencarbonat, Propylencarbonat, Diethylcarbonat, Dimethylcarbonat, Ethylmethylcarbonat, Acetonitril, Glutaronitril, Adiponitril, Pimelonitril, gamma-Butyrolacton, gamma-Valerolacton, Dimethoxyethan, 1,3-Dioxalan, Methylacetat und/oder Mischungen davon zum Einsatz.

In einer vorteilhaften Ausführung ist die Wandung der Hohlkörper, also zum Beispiel der Glashohlkugeln, derart gestaltet, dass die Wandung nicht vollständig aufgelöst wird, sondern nur teilweise, also insbesondere durch die vorstehend beschriebene chemische Reaktion. Dadurch kann der Inhalt der jeweiligen Hohlkörper zu einem bestimmten Zeitpunkt austreten, die Hohlkörperstruktur bleibt aber nach der Auflösung löslicher Bestandteile der Wandung zumindest zu Teilen erhalten. Diese "Reststruktur", bspw. in Form eines Gerippes, das die löslichen Bestandteile im Ausgangszustand durchzieht, kann dann vorteilhafterweise weiterhin eine gewisse räumliche Tragstruktur bilden und bspw. einen strukturellen Kollaps von die Hohlkörper aufweisenden Elementen der Zelle verhindern (letzteres insbesondere im Fall von vergleichsweise großen Hohlkörpern).

Hierzu ist bspw. die Ausführung der Hohlkörper aus Borosilikatglas zweckmäßig. In diesem Fall wird der silikatische Teil aufgrund der Reaktion mit dem Elektrolyten (oder den vorstehend beschriebenen Nebenprodukten) mit der Zeit aufgelöst, die durch Bor gebildeten Strukturen bleiben aber in Form des Gerippes "stehen". Optional kann eine solche teilweise Auflösung der Hohlkörper (und damit das Verbleiben der Reststruktur) auch durch die Kombination unterschiedlicher Gläser oder eines unterschiedlich dotierten Glases ermöglicht werden. Bspw. bewirken Dotierungen mit Bor oder Germanium unterschiedliche Löslichkeiten im Elektrolyten, so dass ein innerer Hohlkörper mit der einen Dotierung und ein diesen umgebender äußerer Hohlkörper mit der anderen Dotierung vorgesehen sein kann.

In einer weiteren zweckmäßigen Ausführung ist eine Auflösungsdauer der Hohlkörper durch eine Wahl der Wandstärke der Wandung der Hohlkörper vorgegeben. Anders ausgedrückt wird die Dauer, bis sich die Wandung der Hohlkörper und somit insbesondere letztere selbst aufgelöst hat bzw. haben, mithin also der Zeitpunkt (oder der Zeitraum) der Freisetzung des Inhalts, durch eine geeignete Wahl der Wandstärke vorgegeben.

Im Falle der Verwendung von Glas wird außerdem die Reaktivität der Gläser durch eine chemische Vorspannung beeinflusst, so dass in einer optionalen (zusätzlichen oder alternativen) Ausführung die Lösungsgeschwindigkeit durch eine entsprechende chemische Vorspannung vorgegeben wird. Zur chemischen Vorspannung wird ein Ionenaustausch (kleine gegen große Ionen oder umgekehrt) im Glas mittels Salzbädern durchgeführt.

In einer optionalen Variante kommen Hohlkörper mit unterschiedlicher Wandstärke und/oder unterschiedlicher Größe, d. h. insbesondere unterschiedlichem Durchmesser, zum Einsatz. Dadurch kann vorteilhafterweise die Freisetzung des Inhalts der Hohlkörper über einen vergleichsweise langen Zeitraum gestreckt werden. Dabei braucht bekanntermaßen nicht jeder Hohlkörper von den anderen abweichen, sondern es kann ein Mischung von Hohlkörper zu Einsatz kommen, die ein vorgegebenes Spektrum an unterschiedlichen Abmessungen abdeckt.

In einer zweckmäßigen Variante liegen die Wandstärken im Bereich zwischen 1 Nanometer und 30 Mikrometern, insbesondere zwischen 5 Nanometern und 5 Mikrometern. Durchmesser der Hohlkörper und insbesondere der Glashohlkugeln liegen vorzugsweise im Bereich zwischen 10 Nanometern und 1 Millimeter, insbesondere zwischen 50 Nanometern und 500 Mikrometern, bevorzugt zwischen 0,1 und 100 Mikrometern.

In einer bevorzugten Ausführung sind die Hohlkörper in einer Beschichtung des vorstehend beschriebenen Separators und/oder wenigstens eines inaktiven Bauelements der Zelle aufgenommen. Dabei kann vorteilhafterweise eine meist ohnehin erforderliche Beschichtung des Separators um einen zusätzlichen Nutzen - nämlich als Trägermaterial für die Hohlkörper - erweitert werden. Dies ist auch hinsichtlich einer wirtschaftlichen Fertigung vorteilhaft, da kein zusätzlicher Beschichtungsprozess erforderlich wird. Für den Fall, dass die Hohlkörper wie vorstehend beschrieben derart gestaltet sind, dass eine Reststruktur erhalten, also nicht chemisch gelöst wird, kann bei dieser Ausführung auch ein Dickenverlust der Separator-Beschichtung vermieden oder zumindest reduziert werden, so dass der Kontakt zwischen der jeweiligen Elektrode und dem Separator nicht verloren geht.

Insbesondere handelt es sich bei einem solchen inaktiven Bauelement um eine Wand des Zellgehäuses und/oder um einen, insbesondere unbeschichteten, Abschnitt eines Stromableiters an einer der Elektroden. Dies hat wiederum den Vorteil, dass eine unter Umständen auftretende Beeinflussung von Eigenschaften der aktiven Bauelemente (insbesondere der Elektroden bzw. des Separators) vermieden werden kann. Für den Fall, dass der oder jeder Stromableiter mit der die Hohlkörper enthaltenden Beschichtung versehen wird, ist zweckmäßiger ein Kontaktbereich des oder des jeweiligen Stromableiters für die nachfolgende galvanische Kontaktierung frei von der Beschichtung oder zumindest elektrisch leitfähig zu halten. Bspw. wird hierzu bei der Beschichtung eines Maske verwendet, die dazu führt, dass der entsprechende Kontaktbereich nicht beschichtet wird.

Grundsätzlich können die Hohlkörper auch in einer Beschichtung der Elektroden angeordnet sein. Allerdings ist hier das Risiko einer mechanischen Zerstörung der Hohlkörper während der Elektrodenfertigung, insbesondere während üblicherweise durchgeführter Kalandrier-Prozesse, vergleichsweise hoch.

Des Weiteren wäre es im Rahmen der Erfindung auch denkbar, die Hohlkörper beispielsweise in das Elektrodenmaterial oder andere Bauelemente selbst einzubetten.

Ferner können die Hohlkörper auch - zusätzlich oder alternativ zu den vorstehend beschriebenen Ausführungen - in ohnehin vorhandenen Hohlräumen der Zelle angeordnet sein, sofern diese mit dem Elektrolyt in Verbindung stehen. Bei solchen Hohlräumen handelt es sich bspw. um ohnehin vorhandene Poren der oder der jeweiligen Elektrode, die meist Porositäten im Bereich von 20 bis 30 Vol.-%. Solche Poren weisen dabei Größen (Durchmesser) im Bereich von insbesondere 0,1 bis 15 Mikrometern auf und liegen somit zumindest teilweise im Bereich der vorstehend genannten Durchmesser der Hohlkörper, so dass letztere - zumindest deren Anteil mit einem korrespondierenden Durchmesserbereich - auch in diese Poren eingebracht werden können.

Davon unabhängig ist eine Ausführung des Verfahrens bevorzugt, bei der das Arbeitsfenster, so wie bereits zuvor ausgeführt, durch einen oberen Arbeits-Spannungs-Grenzwert und einen unteren Arbeits-Spannungs-Grenzwert begrenzt ist und bei der die Zellspannung der Akkumulator-Zelle im Regenerationsmodus unter den unteren Arbeits-Spannungs-Grenzwert abgesenkt wird, um die chemische Reaktion hervorzurufen. Weiter bevorzugt wird die Zellspannung der Zelle dabei im Regenerationsmodus unter einen oberen Regeneration-Spannungs-Grenzwert abgesenkt, der zumindest 0,5 V und insbesondere zumindest 1 V unter dem unteren Arbeits-Spannungs-Grenzwert liegt. Somit findet im Regenerationsmodus typischerweise eine sogenannte Tiefenentladung statt.

Außerdem wird die Zellspannung der Zelle bevorzugt im Regenerationsmodus oberhalb eines unteren Regenerations-Spannungs-Grenzwerts gehalten, der größer gleich 0,5 V, weiter bevorzugt größer gleich 1,0 V und insbesondere größer gleich 1,5 V ist, also zum Beispiel im Falle einer Ausführung mit einer negativen Elektrode aus Graphit und einer positiven Elektrode aus einem NMC. Als vorteilhaft wird es darüber hinaus angesehen, wenn die Zellspannung der Zelle im Regenerationsmodus in ein Regenerationsfenster geführt und dort bis zum Beenden des Regenerationsmodus gehalten wird. Das Regenerationsfenster wird dabei begrenzt vom unteren Regenerations-Spannungs-Grenzwert und vom oberen Regeneration-Spannungs-Grenzwert.

Das zuvor beschriebene Arbeitsfenster und das zuvor beschriebene Regenerationsfenster hängen von der Ausgestaltung des Akkumulators und insbesondere von den Materialien der Elektroden ab. Insbesondere auch aus diesem Grund erfolgt im Zuge des Verfahrens bevorzugt in erster Linie eine gezielte Manipulation des Potenzials der negativen Elektrode. D.h., dass das Potential der negativen Elektrode in ein Zielfenster gebracht wird, wobei das Zielfenster typischerweise materialabhängig ist, also insbesondere abhängt vom Material der negativen Elektrode, vom Elektrolyt und/oder vom Additiv. Dieses Zielfenster liegt dabei üblicherweise im Bereich 1,0 V bis 2,0 V. Hierbei wird nicht die Normal-Wasserstoffelektrode für das Bezugspotenzial herangezogen sondern eine Li⁺/Li-Elektrode. Das Potential der positiven Elektrode ist seinerseits typischerweise materialabhängig, also insbesondere abhängt vom Material der positiven Elektrode, vom Elektrolyt und/oder vom Additiv. Es bleibt aber üblicherweise in einem normalen Spannungsfenster. Im Falle einer negativen Elektrode aus Graphit und einer positiven Elektrode aus NMC, beispielsweise NMC-622, ergibt sich dann zum Beispiel eine Zellspannung für die Regeneration von 1,6 V, bei einem Potential der negativen Elektrode von 2 V und einem Potential von 3,6 V an der positiven Elektrode (Bezugspotenzial ist Li⁺/Li-Elektrode). Beim Einsatz anderer Materialien für die positive Elektrode, wie z.B. LFP, mit anderem Potentialfenster verändern sich die resultierenden Zellspannungen für Arbeitsmodus und Regenerationsmodus entsprechend.

Es sei an dieser Stelle der Vollständigkeit halber noch angemerkt, dass alle zuvor und nachfolgend genannten Potentiale, Spannungswerte und Spannungsgrenzen typischerweise für Temperaturen größer gleich 0 °C gelten. Bei Temperaturen darunter gelten üblicherweise erweiterte Spannungsgrenzen.

Insbesondere aus diesem Grund ist es weiterhin von Vorteil, die Regeneration bei mittleren (Umgebungs-) Temperaturen durchzuführen, also vorzugsweise bei Temperaturen im Bereich 10 °C bis 35 °C und insbesondere bei Temperaturen im Bereich 20 °C bis 25 °C, also zum Beispiel bei etwa 25 °C.

Zweckdienlich sind zudem Ausführungsvarianten, bei denen das Additiv zumindest bis zum erstmaligen Betrieb des Akkumulators im Regenerationsmodus an der negativen Elektrode lokalisiert oder lokal gebunden ist. Dies wird üblicherweise unter anderem dadurch erreicht, dass das Additiv beim Einbringen an der negativen Elektrode positioniert wird oder zumindest im Bereich der negativen Elektrode, also insbesondere auf der der negativen Elektrode zugewandten Seite des Separators. In einigen Fällen wird zudem ein Additiv verwendet, welches im Elektrolyt nicht löslich ist und/oder dessen Komponenten den Separator nicht passieren können.

Davon unabhängig sind Ausführungsvarianten von Vorteil, bei denen das Additiv an einem der zuvor bereits genannten Stromableiter positioniert ist, insbesondere an dem Stromabnehmer an der negativen Elektrode. Dabei ist dann an dem entsprechenden Stromabnehmer typischerweise eine Beschichtung ausgebildet, die das Additiv aufweist.

Wie bereits ausgeführt erfolgte die Regeneration über einen Regenerations-Zeitraum hinweg. D. h., dass die chemische Reaktion über eine gewisse Dauer hinweg aufrechterhalten wird oder am Laufen gehalten wird, insbesondere indem die Zellspannung der Zelle in dem zuvor genannten Regenerationsfenster gehalten wird. Hierbei liegt der Wert des Regenerations-Zeitraums typischerweise im Bereich 5 min bis 8 h und insbesondere im Bereich 30 min bis 2 h. Dabei wird der Regenerations-Zeitraum selbst üblicherweise nicht vorgegeben, sondern ergibt sich aus der Vorgabe einer Stromrate für die Regeneration, insbesondere aus der Vorgabe einer sogenannten C-Rate oder eines C-Koeffizienten, sowie aus dem Kapazitätsverlust über den vorangegangenen Nutzungs-Zeitraum hinweg. Für die C-Rate oder den C-Koeffizienten wird dann typischerweise ein Wert im Bereich C/50 bis C/5 vorgegeben.

In einigen Anwendungsfällen wird dabei die chemische Reaktion nicht so lange am Laufen gehalten, bis das Additiv vollständig umgesetzt ist, stattdessen wird die chemische Reaktion abgebrochen, bevor das Additiv vollständig umgesetzt ist, insbesondere indem die Zellspannung der Akkumulator-Zelle aus dem Regenerationsfenster herausgeführt und/oder in das Arbeitsfenster hineingeführt wird. In diesem Fall lässt sich dann zu einem späteren Zeitpunkt ein weiterer Regenerationsprozess, Regenerationsteilprozess oder Regenerationszyklus durchführen, bei dem ein weiterer Anteil des Additivs umgesetzt wird, beispielsweise auch der gesamte restliche Anteil. Die Regeneration erfolgt somit dann in mehreren Teilen, Stufen oder Zyklen und es liegt dementsprechend dann eine mehrstufige oder mehrteilige Regeneration vor.

Sind mehrere Regenerationsprozesse, Regenerationsteilprozesse oder Regenerationszyklen vorgesehen, so bezieht sich der zuvor genannte Regenerations-Zeitraum auf einen dieser Regenerationsprozesse, Regenerationsteilprozesse oder Regenerationszyklen, insbesondere auf den im Hinblick auf die zeitliche Abfolge ersten. Bevorzugt wird dabei der Regenerations-Zeitraum nach Bedarf vorgegeben, also zum Beispiel in Abhängigkeit des Nutzungs-Zeitraums oder in Abhängigkeit einer messtechnisch ermittelten Kapazität der Zelle oder des Akkumulators.

In vorteilhafter Weiterbildung wird mithilfe eines Messvorgangs die Menge an Additiv ermittelt, die im Reaktion-Zeitraum umgesetzt wird. D. h. dass beispielsweise mithilfe eines Stromzählers die Menge an umgesetztem Additiv ermittelt wird. Ausgehend von der Startmenge wird dann ermittelt, welche Restmenge an Additiv noch vorhanden ist und diese Information wird dann bevorzugt in einem nachfolgenden Regenerationsprozess oder Regenerationszyklus berücksichtigt.

Die im Zusammenhang mit dem zuvor beschriebenen Verfahren beschriebenen Vorteile und Weiterbildungen sind sinngemäß auch auf den zuvor beschriebenen Lithium-Ionen-Akkumulator zu übertragen und umgekehrt.

Dabei weist der Akkumulator zweckdienlicherweise die Akkumulator-Zelle mit der positiven Elektrode, mit der negativen Elektrode, mit dem Separator, mit dem Elektrolyt sowie mit dem Additiv auf. Zudem ist der Akkumulator zweckdienlicherweise derart eingerichtet, dass dieser nach seiner Fertigstellung in dem Arbeitsmodus über den Nutzungs-Zeitraum hinweg betreibbar ist und dass dieser nach dem Betrieb in dem Arbeitsmodus über den Nutzungs-Zeitraum hinweg regenerierbar ist, durch das Betreiben der Akkumulator-Zelle über den Regenerations-Zeitraum hinweg in dem Regenerationsmodus, durch Hervorrufen der chemischen Reaktion innerhalb der Akkumulator-Zelle im Regenerationsmodus, wobei an der chemischen Reaktion das Additiv beteiligt ist, durch Herausführen der Zellspannung der Akkumulator-Zelle aus dem Arbeitsfenster des Arbeitsmodus zum Zwecke des Hervorrufens der chemischen Reaktion, und
durch Erhöhung der Anzahl mobiler Lithium-Ionen in der Akkumulator-Zelle im Zuge der chemischen Reaktion.

Zudem weist der Akkumulator bevorzugt die zuvor genannte Steuereinrichtung oder das zuvor genannte Steuergerät auf. Diese bzw. dieses ist in einigen Fällen eingerichtet zur automatischen Ausführung des Verfahrens.

Weitere Vorteile, Merkmale und Einzelheiten der Erfindung ergeben sich aus den Ansprüchen, der nachfolgenden Beschreibung bevorzugter Ausführungsformen sowie anhand der schematischen Zeichnungen. Darin zeigen:
- Fig. 1: eine vereinfachte Schnittdarstellung einer Akkumulator-Zelle eines Lithium-Ionen-Akkumulators sowie
- Fig. 2: eine Blockschaltbilddarstellung des Lithium-Ionen-Akkumulators.

Einander entsprechende Teile sind in allen Figuren mit den gleichen Bezugszeichen versehen.

Ein nachfolgend exemplarisch beschriebenes Verfahren dient zur Regeneration eines Lithium-Ionen-Akkumulators 2, welcher nachfolgend auch kurz als Akkumulator 2 bezeichnet wird. Der Akkumulator 2 ist dabei im Ausführungsbeispiel als sogenannte Antriebs- oder Traktionsbatterie zum Antrieb eines Elektrofahrzeugs ausgebildet und in einem nicht explizit dargestellten Elektrofahrzeug verbaut.

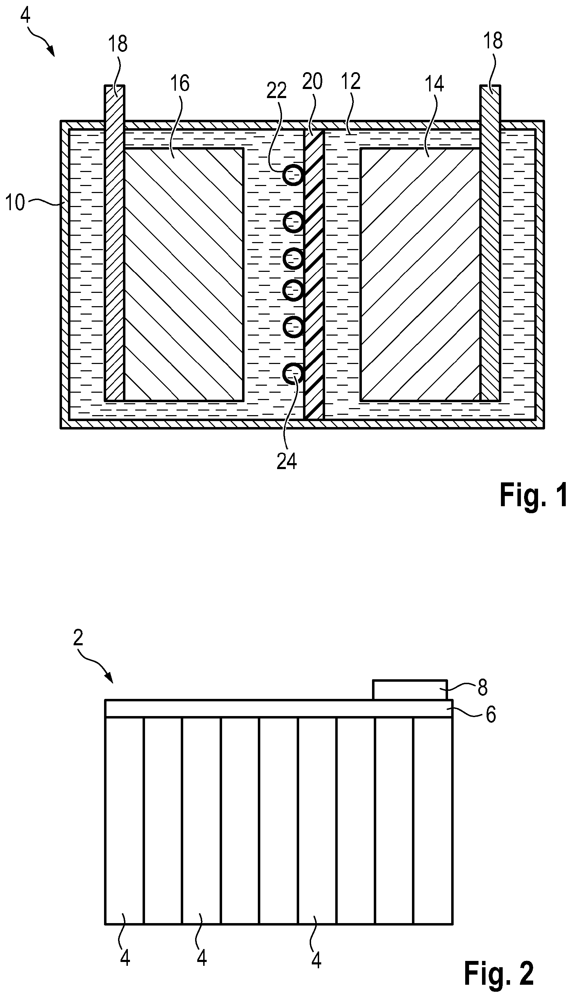

Der Akkumulator 2 weist mehrere einheitlich ausgestaltete Akkumulator-Zellen 4 oder kurz Zellen 4 auf. Eine dieser Zellen 4 ist in Fig. 1 in einer vereinfachten Schnittdarstellung gezeigt. Die Zellen 4 sind im Akkumulator 2 über eine Verschaltungseinrichtung 6 in nicht näher dargestellter Weise miteinander verschaltet. Darüber hinaus weist der in Fig. 2 schematisch wiedergegebene Akkumulator 2 eine Steuereinrichtung 8 auf.

Die Steuereinrichtung 8 ist eingerichtet zur Regelung oder Steuerung des Flusses an elektrischer Energie in und aus dem Akkumulator 2 sowie in und aus den einzelnen Zellen 4. Sie verhindert dabei unter anderem eine sogenannte Tiefenentladung sowie eine Überladung des Akkumulators 2 und insbesondere auch der einzelnen Zellen 4. Zu diesem Zweck hält die Steuereinrichtung 8 die Zellspannungen der Zellen 4 in einem Arbeitsfenster, zumindest solange der Akkumulator 2 in einem Arbeitsmodus betrieben wird. Begrenzt ist das Arbeitsfenster durch einen unteren Arbeits-Spannungs-Grenzwert und einen oberen Arbeits-Spannungs-Grenzwert. Dabei gilt dann eine jede Zelle 4 im Arbeitsmodus als vollständig aufgeladen, wenn der vorgegebene obere Arbeits-Spannungs-Grenzwert erreicht ist, und als vollständig entladen, wenn der vorgegebene untere Arbeits-Spannungs-Grenzwert erreicht ist. Ein typischer Wert für den unteren Arbeits-Spannungs-Grenzwert ist zum Beispiel 2,5 V und typischer Wert für den oberen Arbeits-Spannungs-Grenzwert ist beispielsweise 4,3 V.

Eine jede Zelle 4 weist im Ausführungsbeispiel gemäß Fig. 1 ein Zellgehäuse 10 auf, welches mit einem Elektrolyt 12, genauer einer Elektrolytlösung 12, befüllt ist. In der Elektrolytlösung 12 sind eine positive Elektrode 14 und eine negative Elektrode 16 angeordnet, wobei sich an jede Elektrode 14,16 ein Stromabnehmer 18 anschließt. Getrennt werden die Elektroden 14,16 durch einen Separator 20.

Außerdem sind in dem Zellgehäuse 10 eine Vielzahl von Hohlkörpern angeordnet, die im Ausführungsbeispiel als Glashohlkugeln 22 ausgestaltet und mit einem Additiv 24 gefüllt sind. Die Glashohlkugeln 22 stehen hierbei ständig mit der im Zellgehäuse 10 aufgenommenen Elektrolytlösung 12 in Kontakt. Dadurch wird das Glas der Glashohlkugeln 22 mit der Zeit von der Elektrolytlösung 12 zersetzt, bis schließlich die Wandungen der Glashohlkugeln 22 (also deren gläserne Schale) soweit zerstört sind, dass deren Inhalt, also das Additiv 24 freigegeben wird. Dies geschieht typischerweise frühestens einen Monat nach Fertigstellung des Akkumulators 2. Im dargestellten Ausführungsbeispiel sind die Glashohlkugeln 22 weiterhin in eine nicht explizit dargestellte Beschichtung eingebettet, welche auf der der negativen Elektrode 16 zugewandten Seite des Separators 20 ausgebildet ist.

Der zuvor beschriebene Akkumulator 2 wird nun also als Antriebs- oder Traktionsbatterie zum Antrieb des Elektrofahrzeugs genutzt und hierbei stets in dem Arbeitsmodus betrieben. Dabei wird der Akkumulator 2 immer wieder aufgeladen und entladen. Dies geschieht über einen Nutzungs-Zeitraum hinweg von wenigstens einem Jahr.

Aufgrund von unerwünschten Nebenreaktionen im Akkumulator 2 nimmt dabei die Anzahl freier Lithium-Ionen typischerweise mit der Zeit ab und somit auch die Anzahl Lithium-Ionen, die zu einem Ladungstransport im Akkumulator 2 und insbesondere in den Zellen 4 beitragen können. Hierdurch wird die Leistungsfähigkeit des Akkumulators 2 reduziert. Zur Kompensation dieses Effekts wird nach dem Nutzungs-Zeitraum von wenigstens einem Jahr eine Regeneration oder ein Regenerationsprozess durchgeführt beispielsweise im Rahmen einer Wartung des Elektrofahrzeugs bei einem Servicedienstleister.

Dabei wird der Akkumulator 2 über einen Regenerations-Zeitraum von beispielsweise 60 min hinweg in einem Regenerationsmodus betrieben, also einem Betriebsmodus, der sich vom Arbeitsmodus unterscheidet. Dadurch wird im Regenerationsmodus innerhalb der Zellen 4 eine chemische Reaktion hervorgerufen, an der das in den Zellen vorliegende Additiv beteiligt ist. Infolge der chemischen Reaktion wird dann die Anzahl freier und somit mobiler Lithium-Ionen in den Zellen wieder erhöht und der Akkumulator 2 wird hierdurch regeneriert.

Die chemische Reaktion, bei der es sich typischerweise um eine sogenannte Reduktions-Oxidations-Reaktion oder kurz Redoxreaktion handelt, wird dabei hervorgerufen, indem die Zellspannungen der Zellen 4 aus dem Arbeitsfenster des Arbeitsmodus herausgeführt und in ein Regenerationsfenster hineingeführt werden. Dort werden die Zellspannungen gehalten bis zum Beenden des Regenerationsmodus. Je nach Anwendungsfall liegt dabei das Regenerationsfenster üblicherweise zumindest 0,5 V unterhalb des Arbeitsfensters. Somit findet im Regenerationsmodus typischerweise eine sogenannte Tiefenentladung statt.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

### Bezugszeichenliste

- 2: Lithium-Ionen-Akkumulator
- 4: Akkumulator-Zelle
- 6: Verschaltungseinrichtung
- 8: Steuereinrichtung
- 10: Zellgehäuse
- 12: Elektrolyt
- 14: positive Elektrode
- 16: negative Elektrode
- 18: Stromabnehmer
- 20: Separator
- 22: Glashohlkugel
- 24: Additiv

## Patentansprüche

1. Verfahren zur Regeneration eines fertiggestellten Lithium-Ionen-Akkumulators (2) nach einem Betrieb des fertiggestellten Lithium-Ionen-Akkumulators (2) in einem Arbeitsmodus über einen Nutzungs-Zeitraum hinweg, wobei der Lithium-Ionen-Akkumulator (2) eine Akkumulator-Zelle (4) aufweist mit einer positiven Elektrode (14), mit einer negativen Elektrode (16), mit einem Separator (20) und mit einem Elektrolyt (12),
wobei
- die Akkumulator-Zelle (4) über einen Regenerations-Zeitraum hinweg in einem Regenerationsmodus betrieben wird,
- im Regenerationsmodus innerhalb der Akkumulator-Zelle (4) eine chemische Reaktion hervorgerufen wird, an der ein in der Akkumulator-Zelle (4) vorliegendes Additiv (24) beteiligt ist,
- die chemische Reaktion hervorgerufen wird, indem die Zellspannung der Akkumulator-Zelle (4) aus einem Arbeitsfenster des Arbeitsmodus herausgeführt wird, und
- durch die chemische Reaktion die Anzahl mobiler Lithium-Ionen in der Akkumulator-Zelle (4) erhöht wird und die Akkumulator-Zelle (4) dadurch regeneriert wird.

2. Verfahren nach Anspruch 1,
wobei zur Regeneration als Additiv (24) eine Substanz genutzt wird, welche Lithium aufweist.

3. Verfahren nach Anspruch 1 oder 2,
wobei zur Regeneration als Additiv (24) zumindest eine der folgenden Substanzen genutzt wird: ein Lithium-Salz, eine Organometall-Verbindung, eine organische Säure, ein Alkoholat oder ein Polyelektrolyt.

4. Verfahren nach einem der Ansprüche 1 bis 3,
wobei das Additiv (4) im fertiggestellten Lithium-Ionen-Akkumulator (4) aus einer Verkapselung (22) freigesetzt wird, so dass dieses nachfolgend für die Regeneration zur Verfügung steht.

5. Verfahren nach einem der Ansprüche 1 bis 4,
wobei das Arbeitsfenster durch einen oberen Arbeits-Spannungs-Grenzwert und einen unteren Arbeits-Spannungs-Grenzwert vorgegeben ist und wobei die Zellspannung der Akkumulator-Zelle (4) im Regenerationsmodus unter den unteren Arbeits-Spannungs-Grenzwert abgesenkt wird, um die chemische Reaktion hervorzurufen.

6. Verfahren nach einem der Ansprüche 1 bis 5,
wobei das Additiv (24) im Bereich der negativen Elektrode (16) lokal gebunden ist.

7. Verfahren nach einem der Ansprüche 1 bis 6,
wobei als Additiv (24) eine Substanz verwendet ist, welche im Elektrolyt (12) nicht löslich ist.

8. Verfahren nach einem der Ansprüche 1 bis 7,
wobei die chemische Reaktion über einen vorgegebenen Reaktions-Zeitraum am Laufen gehalten wird, indem die Zellspannung der Akkumulator-Zelle (4) in einem Reaktions-Fenster gehalten wird, und wobei die chemische Reaktion abgebrochen wird, bevor das Additiv (24) vollständig umgesetzt ist, indem die Zellspannung der Akkumulator-Zelle (4) aus dem Reaktions-Fenster herausgeführt wird.

9. Verfahren nach einem der Ansprüche 1 bis 8,
wobei mit Hilfe eines Messvorgangs die Menge an Additiv (24) ermittelt wird, die im Reaktions-Zeitraum umgesetzt wird.

10. Lithium-Ionen-Akkumulator (2) aufweisend eine Akkumulator-Zelle (4) mit einer positiven Elektrode (14), mit einer negativen Elektrode (16), mit einem Separator (20), mit einem Elektrolyt (12) sowie mit einem Additiv (24) und eingerichtet derart, dass dieser nach Fertigstellung in einem Arbeitsmodus über einen Nutzungs-Zeitraum hinweg betreibbar ist und dass dieser nach dem Betrieb in dem Arbeitsmodus über den Nutzungs-Zeitraum hinweg regenerierbar ist, durch
- ein Betreiben der Akkumulator-Zelle (4) über einen Regenerations-Zeitraum hinweg in einem Regenerationsmodus,
- Hervorrufen einer chemischen Reaktion innerhalb der Akkumulator-Zelle (4) im Regenerationsmodus, wobei an der chemischen Reaktion das Additiv (24) beteiligt ist,
- Herausführen der Zellspannung der Akkumulator-Zelle (4) aus dem Arbeitsfenster des Arbeitsmodus zum Zwecke des Hervorrufens der chemischen Reaktion, und
- Erhöhung der Anzahl mobiler Lithium-Ionen in der Akkumulator-Zelle (4) im Zuge der chemischen Reaktion.

## Claims

1. Method for the regeneration of a completed lithium-ion battery (2) after operation of the completed lithium-ion battery (2) in a working mode over a period of use, wherein the lithium-ion battery (2) has a battery cell (4) with a positive electrode (14), with a negative electrode (16), with a separator (20) and with an electrolyte (12),
wherein
- the battery cell (4) is operated in a regeneration mode over a regeneration period,
- in the regeneration mode, a chemical reaction in which an additive (24) present in the battery cell (4) is involved is induced within the battery cell (4),
- the chemical reaction is induced by bringing the cell voltage of the battery cell (4) out of a working window of the working mode, and
- the chemical reaction increases the number of mobile lithium ions in the battery cell (4) and thereby regenerates the battery cell (4).

2. Method according to Claim 1,
wherein a substance comprising lithium is used as the additive (24) for the regeneration.

3. Method according to Claim 1
or 2, wherein at least one of the following substances is used as the additive (24) for the regeneration: a lithium salt, an organometallic compound, an organic acid, an alcoholate or a polyelectrolyte.

4. Method according to one of Claims 1 to 3,
wherein the additive (4) is released in the completed lithium-ion battery (4) from an encapsulation (22), so that it is subsequently available for the regeneration.

5. Method according to one of Claims 1 to 4,
wherein the working window is predetermined by an upper working voltage limit and a lower working voltage limit and wherein in the regeneration mode the cell voltage of the battery cell (4) is lowered below the lower working voltage limit in order to induce the chemical reaction.

6. Method according to one of Claims 1 to 5,
wherein the additive (24) is locally bound in the region of the negative electrode (16).

7. Method according to one of Claims 1 to 6,
wherein a substance which is not soluble in the electrolyte (12) is used as the additive (24).

8. Method according to one of Claims 1 to 7,
wherein the chemical reaction is maintained over a predetermined reaction period by keeping the cell voltage of the battery cell (4) in a reaction window, and wherein the chemical reaction is interrupted before the additive (24) has reacted completely by bringing the cell voltage of the battery cell (4) out of the reaction window.

9. Method according to one of Claims 1 to 8,
wherein the amount of additive (24) that is converted during the reaction period is determined by means of a measuring process.

10. Lithium-ion battery (2) comprising a battery cell (4) with a positive electrode (14), with a negative electrode (16), with a separator (20), with an electrolyte (12) and with an additive (24) and set up in such a way that after completion it can be operated in a working mode over a period of use and that after operation in the working mode it can be regenerated over the period of use, by
- operating the battery cell (4) in a regeneration mode over a regeneration period,
- inducing a chemical reaction within the battery cell (4) in the regeneration mode, wherein the additive (24) is involved in the chemical reaction,
- bringing the cell voltage of the battery cell (4) out of the working window of the working mode for the purpose of inducing the chemical reaction, and
- increasing the number of mobile lithium ions in the battery cell (4) in the course of the chemical reaction.

## Revendications

1. Procédé de régénération d'un accumulateur lithium-ion (2) terminé après un fonctionnement de l'accumulateur lithium-ion (2) terminé dans un mode de fonctionnement pendant une période d'utilisation, dans lequel l'accumulateur lithium-ion (2) comporte une cellule d'accumulateur (20) comprenant une électrode positive (12), une électrode négative (16), un séparateur (4) et un électrolyte (14),
dans lequel
- la cellule d'accumulateur (4) fonctionne en mode de régénération pendant une période de régénération,
- en mode de régénération, une réaction chimique à laquelle participe un additif (24) présent dans la cellule d'accumulateur (4) est provoquée à l'intérieur de la cellule d'accumulateur (4),
- la réaction chimique est provoquée en amenant la tension de cellule de la cellule d'accumulateur (4) hors d'une fenêtre de fonctionnement du mode de fonctionnement, et
- la réaction chimique augmente le nombre d'ions lithium mobiles dans la cellule d'accumulateur (4) et la cellule d'accumulateur (4) est ainsi régénérée.

2. Procédé selon la revendication 1,
dans lequel, pour la régénération, une substance comprenant du lithium est utilisée comme additif (24).

3. Procédé selon la revendication 1
ou 2, dans lequel, pour la régénération, au moins l'une des substances suivantes est utilisée comme additif (24) : un sel de lithium, un composé organométallique, un acide organique, un alcoolate ou un polyélectrolyte.

4. Procédé selon l'une des revendications 1 à 3,
dans lequel l'additif (4) est libéré d'une encapsulation (22) dans l'accumulateur lithium-ion terminé (4), de sorte que ledit additif est ensuite disponible pour la régénération.

5. Procédé selon l'une des revendications 1 à 4,
dans lequel la fenêtre de fonctionnement est prédéfinie par une valeur limite supérieure de tension de fonctionnement et une valeur limite inférieure de tension de fonctionnement, et la tension de cellule de la cellule d'accumulateur (4) est abaissée en dessous de la valeur limite inférieure de tension de fonctionnement en mode de régénération afin de provoquer la réaction chimique.

6. Procédé selon l'une des revendications 1 à 5,
dans lequel l'additif (24) est lié localement dans la région de l'électrode négative (16).

7. Procédé selon l'une des revendications 1 à 6,
dans lequel l'additif (24) utilisé est une substance qui est insoluble dans l'électrolyte (12).

8. Procédé selon l'une des revendications 1 à 7,
dans lequel la réaction chimique est maintenue pendant une période de réaction prédéfinie en maintenant la tension de cellule de la cellule d'accumulateur (4) dans une fenêtre de réaction, et dans lequel la réaction chimique est interrompue avant que l'additif (24) ne soit entièrement transformé en amenant la tension de cellule de la cellule d'accumulateur (4) hors de la fenêtre de réaction.

9. Procédé selon l'une des revendications 1 à 8,
dans lequel la quantité d'additif (24) qui est transformée pendant la période de réaction est déterminée à l'aide d'un processus de mesure.

10. Accumulateur lithium-ion (2) comportant une cellule d'accumulateur (4) comprenant une électrode positive (14), une électrode négative (16), un séparateur (20), un électrolyte (12) et un additif (24), et conçu de telle sorte qu'après son achèvement, il peut fonctionner dans un mode de fonctionnement pendant une période d'utilisation et qu'après son fonctionnement dans le mode de fonctionnement pendant la période d'utilisation, il peut être régénéré par
- un fonctionnement de la cellule d'accumulateur (4) en mode de régénération pendant une période de régénération,
- le fait de provoquer une réaction chimique à l'intérieur de la cellule d'accumulateur (4) en mode de régénération, l'additif (24) participant à la réaction chimique,
- le fait d'amener la tension de cellule de la cellule d'accumulateur (4) hors de la fenêtre de fonctionnement du mode de fonctionnement afin de provoquer la réaction chimique, et
- l'augmentation du nombre d'ions lithium mobiles dans la cellule d'accumulateur (4) au cours de la réaction chimique.
